Europäisches Patentamt

European Patent Office

Office européen des brevets

(11) Numéro de publication: **0 253 771 B1**

# FASCICULE DE BREVET EUROPEEN

(45) Date de publication de fascicule du brevet:
03.04.91

(51) Int. Cl.⁵: **A44C 11/02**, F16B 45/02

(21) Numéro de dépôt: **87810390.2**

(22) Date de dépôt: **09.07.87**

(54) Fermoir pour parure.

(30) Priorité: **18.07.86 JP 167829/86**

(43) Date de publication de la demande:
**20.01.88 Bulletin 88/03**

(45) Mention de la délivrance du brevet:
**03.04.91 Bulletin 91/14**

(84) Etats contractants désignés:
**AT BE CH DE ES FR GB IT LI**

(56) Documents cités:
**DE-B- 1 261 402**      **DE-C- 60 359**
**DE-U- 8 515 574**      **FR-A- 593 136**
**FR-A- 1 160 603**      **GB-A- 2 106 584**
**US-A- 1 576 352**

(73) Titulaire: **HEIWADO BOUEKI KABUSHIKI KAIS-HA**
**8, 1-chome Higashi-Azabu**
**Minato-ku Tokyo(JP)**

(72) Inventeur: **Hiraishi, Mamoru**
**2-36-21, Toyoda**
**Hino-shi Tokyo(JP)**

(74) Mandataire: **North, Mathieu**
**Rue du Puits-Godet 22**
**CH-2001 Neuchâtel(CH)**

## Description

La présente invention a trait à un fermoir pour parure, et plus particulièrement à un fermoir destiné à des colliers. Le but de l'invention est de fournir un fermoir qui facilite l'ouverture et la fermeture, et qui permette par conséquent de mettre et d'enlever facilement la parure.

Il existe des fermoirs pour parure, et notamment pour des colliers ou des bracelets, qui comprennent un élément principal recourbé en crochet et une pièce de fermeture mue par un ressort de manière à fermer l'ouverture présentée par l'élément principal en forme de crochet. Dans la forme d'exécution la plus commune de ce genre de fermoirs, l'ouverture de la pièce de fermeture est commandée par l'ongle du porteur, et le crochet est introduit dans un anneau attachée à l'autre bout de la parure; une fois le crochet dans l'anneau, il suffit de relâcher la pression de l'ongle sur la pièce de fermeture pour que celle-ci se referme sous l'action d'un ressort et empêche ainsi le crochet de sortir de l'anneau.

C'est le cas par exemple du fermoir décrit dans le modèle d'utilité allemand no. DE-U-8 515 574. Ce fermoir présente un élément principal, destiné à être attaché à un hout d'un collier, et pourvu d'une partie recourbée en crochet; une pièce de fermeture pivotante présente un bout apte à fermer l'ouverture du crochet sous l'action d'un ressort, et un autre bout, en forme de levier, qui permet de faire pivoter cette pièce de fermeture en s'opposant à la pression du ressort et en ouvrant ainsi l'ouverture du crochet.

On a également proposé récemment un bracelet destiné aux montres, qui est verrouillé à un anneau attenant à la boîte au moyen d'un fermoir du même type, qui permet de mettre et d'enlever la montre. Il s'agit là d'une nouveauté dans le dessin si on la compare aux produits classiques dans lesquels l'ouverture et la fermeture du bracelet se font grâce à une partie métallique située dans une portion intermédiare du bracelet de montre.

Habituellement, la pièce de fermeture de tels fermoirs classiques, et spécialement pour des colliers, est tellement petite qu'il est difficile à une femme qui a de longs ongles d'ouvrir la pièce de fermeture en la pressant avec le bout d'un ongle. De plus, dans le cas d'un collier, la difficulté est accrue du fait que la porteuse du collier doit agir sans voir ce qu'elle fait, le fermoir se trouvant derrière son cou. Dans le cas du bracelet de montre, la pièce de fermeture doit être ouverte d'une seule main. En règle générale, les femmes considèrent donc qu'il est difficile d'enlever et de mettre des parures, sauf si elles sont particulièrement habiles.

On a certes proposé, dans un domaine extérieur à celui des parures, des fermoirs qui peuvent être maniés d'une seule main et qui présentent certains avantages par rapport aux fermoirs classiques. Par exemple, le brevet allemand 1'261'402 décrit un mousqueton qui présente un élément principal recourbé et une pièce de fermeture qui, en position ouverte, est retenue par un crochet; ce crochet est solidaire d'un levier extérieur pivotant et maintenu en position par un ressort. Pour libérer la pièce de fermeture, qui tend elle-même à se refermer sous l'action d'un ressort, il suffit de presser le levier, qui se trouve à l'extérieur du dispositif, en soulevant ainsi le crochet qui libère la pièce de fermeture; sous l'action du ressort, cette pièce se referme. Ce dispositif présente l'avantage de conserver ouverte la pièce de fermeture sans qu'il soit besoin d'exercer une pression constante.

Cependant, un tel dispositif présente une construction peu élégante et n'est guère utilisable pour une parure. De plus, sa construction dans des dimensions réduites est assez difficile.

La présente invention vise à fournir un fermoir utilisable pour des parures, d'une construction simple et qui puisse être de faibles dimensions, et qui permette à l'utilisateur de conserver ouverte la pièce de fermeture sans exercer une pression constante sur celle-ci.

L'invention est décrite dans les revendications.

Les dessins représentent, à titre d'exemple, une forme d'exécution de l'invention.

La figure 1 est une vue en perspective cavalière montrant le fermoir en position fermée.

La figure 2 est une coupe partielle d'un fermoir selon l'invention.

La figure 3 est une vue en perspective du fermoir en position ouverte.

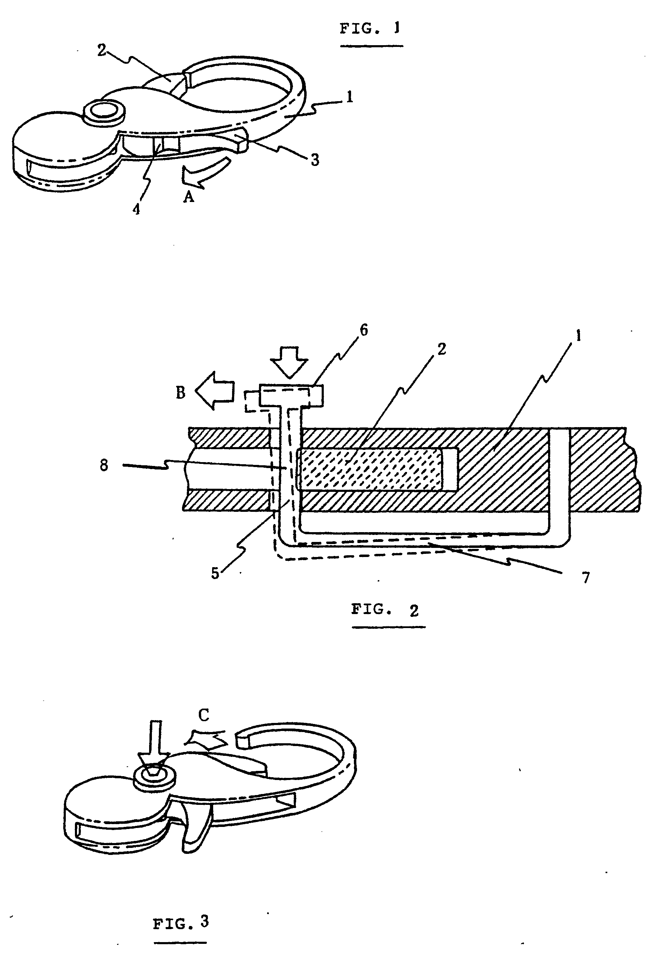

Le fermoir présente un élément principal 1 recourbé en forme de crochet. Une pièce de fermeture 2 est fixée à cet élément principal de manière à pouvoir pivoter. La pièce de fermeture présente un bout conformé de manière à fermer l'ouverture du crochet formé par l'élément principal, lorsque la pièce de fermeture est en position fermée. L'élément de fermeture présente un autre bout 3, qui dépasse de l'élément principal et permet ainsi de faire pivoter la pièce de fermeture avec le doigt. Dans la forme d'exécution représentée ici, la pièce de fermeture pivote dans le plan de l'élément principal. La pièce de fermeture est soumise à l'action d'un ressort, qui n'est pas représenté ici, et qui tend à la maintenir en position fermée. La pièce de fermeture présente un cran 4, qui peut aussi être une protubérance. Un membre de verrouillage 5, qui présente ici la forme d'une tige, de préférence métallique, élastique, est fixé à l'élément principal. Ce membre de verrouillage n'apparaît entièrement que dans le figure 2. Il consiste en une tige doublement coudée. Une première partie de cette tige est enfoncée perpendiculairement dans l'élément principal. Cette première portion est suivie d'une portion allongée 7 sensiblement parallèle au plan de l'élément principal, et qui fait office de ressort. Cette portion allongée est elle-même suivie d'une portion sensiblement perpendiculaire 8 au plan de l'élément principal et qui traverse ce dernier. De l'autre côté de l'élément principal, c'est-à-dire du côté opposé à celui où se trouve la portion allongée, la portion perpendiculaire se termine par un bouton 6. L'ouverture ménagée dans l'élément principal pour le passage de la portion perpendiculaire est suffisamment large pour permettre un débattement de la portion perpendiculaire lorsqu'une pression est exercée sur le bouton. La portion perpendiculaire est en contact avec la pièce de fermeture. En position ouverte, la portion perpendiculaire du membre de verrouillage est introduite dans le cran 4 et empêche ainsi la pièce de fermeture de se refermer. Pour dégager la pièce de fermeture, il suffit ainsi d'exercer une pression sur le bouton 6, dans le sens indiqué par la flèche verticale de la figure 2. La portion perpendiculaire du membre de verrouillage s'écarte alors dans le sens de la flèche B de la figure 2 et se dégage du cran, en prenant la position indiquée par des pointillés. La pièce de fermeture, libérée, pivote dans le sens de la flèche C de la figure 3 et referme l'ouverture de l'élément principal. Pour ouvrir le fermoir, il suffit de manoeuvrer le bout 3 dans le sens de la flèche A de la figure 1. La portion perpendiculaire du membre de verrouillage, d'abord repoussée par le bord du cran, viendra se loger dans ce dernier au moment où il se trouvera en face d'elle.

Dans une autre forme d'exécution, qui n'est pas représentée ici, le membre de verrouillage 5 inclut un ressort spiral qui assume la fonction de ressort assuré dans la forme d'exécution représentée ici par la portion allongée 7.

D'autre part, la forme d'exécution représentée dans les dessins et décrite ici montre une pièce de fermeture pourvue d'un cran dans lequel vient se loger la portion perpendiculaire 8 du membre de verrouillage. Rien n'empêche cependant de remplacer le cran par une protubérance qui coopère avec la portion perpendiculaire. Il s'agit là simplement d'une interversion des fonctions dont le résultat reste le même.

Le fermoir selon l'invention a une structure simple et élégante. Il est aisé à manoeuvré, même d'une seule main, et même derrière le cou. Un avantage supplémentaire du fermoir réside dans le fait que, au moment où la pièce de fermeture 2 est relâchée par la pression exercée sur le bouton 6, elle se ferme sous l'action du ressort avec un déclic qui confirme le fonctionnement du dispositif à la personne qui met la parure sans voir le fermoir.

## Revendications

1. Fermoir pour parure comprenant un élément principal recourbé (1), une pièce de fermeture (2) apte à fermer une ouverture de l'élément principal sous l'action d'un ressort, la pièce de fermeture présentant un bout apte à fermer l'ouverture de l'élément principal et un autre bout (3) permettant de manoeuvrer ladite pièce de fermeture, caractérisée en ce que la pièce de fermeture présente un cran ou protubérance (4) et en ce que le fermoir comprend en outre un membre de verrouillage (5) apte à coopérer avec le cran ou protubérance pour maintenir la pièce de fermeture en position ouverte.

2. Fermoir selon la revendication 1, caractérisé en ce que le membre de verrouillage (5) est fixé par un bout à l'élément principal, l'autre bout (8) étant mobile élastiquement et apte à être pressé, la pression permettant de dégager du cran ou protubérance le membre de verrouillage.

3. Fermoir selon la revendication 2, caractérisé en ce que le membre de verrouillage est une tige élastiquement souple et coudée.

4. Fermoir selon la revendication 3, caractérisé en ce que la pièce de fermeture est fixée sur l'élément principal au moyen d'un pivot qui lui permet de pivoter dans le plan de l'élément principal, et en ce que le membre de verrouillage en forme de tige élastique présente une portion allongée (7) sensiblement parallèle au plan de l'élément principal, cette partie allongée faisant office de ressort, et une portion sensiblement perpendiculaire (8) audit plan, ladite portion perpendiculaire étant apte à s'engager dans le cran (4) de l'élément de fermeture, ladite portion perpendiculaire traversant l'élément principal en se terminant du côté opposé à celui sur lequel se trouve la portion allongée par un bouton (6), l'ouverture ménagée dans l'élément principal pour le passage de ladite portion perpendiculaire étant suffisamment large pour permettre à ladite portion perpendiculaire de s'écarter de l'élément de fermeture (2) lorsqu'une pression est exercée sur le bouton (6), cet écartement étant suffisant pour libérer le cran et pour laisser l'élément de fermeture se refermer sous l'action du ressort.

## Claims

1. Fastener for jewelry comprising a curved principal component (1), a fastening piece (2) capable of closing an opening in the principal component by operation of a spring, the fastening piece features one end able to close the opening in the principal component and another end (3) making it possible to move the said fastening piece, distinguished by the fact that the fastening piece features a notch or protuberance (4) and by the fact that the fastener also comprises a locking element (5) able to work together with the notch or protuberance to maintain the fastening piece in the open position.

2. Fastener according to Claim 1, distinguished by the fact that the locking element (5) is fixed by an end to the principal component, the other end (8) being movable flexibly and capable of being pressed, the pressure making it possible to free the locking element from the notch or protuberance.

3. Fastener according the Claim 2, distinguished by the fact that the locking element is a flexible and angled shaft.

4. Fastener according to Claim 3, distinguished by the fact that the fastening piece is fixed to the principal component by means of a pin which allows it to rotate in the plane of the principal component, and by the fact that the locking element in the form of a flexible shaft features an elongated part (7) roughly parallel to the plane of the principal component, this elongated part acting as a spring, and a part roughly perpendicular (8) to the said plane, the said perpendicular part being able to latch into the notch (4) in the fastening piece, the said perpendicular part crossing through the principal component and terminating in a button (6) on the opposite side to that of the elongated part, the opening which exists in the principal component for the passage of the said perpendicular part being sufficiently wide to allow the said perpendicular portion to separate from the fastening piece (2) when pressure is exercised on the button (6), this separation being sufficient to free the notch and to let the fastening piece snap close by operation of the spring.

## Ansprüche

1. Schmuckverschluss ausgerüstet mit einem hakenförmig gekrümmten Hauptelement (1), mit einem Verschlusselement (2) zum Schliessen einer Lücke im Hauptelement unter Einwirkung einer Feder, versehen mit einem Arm zum Schliessen der Lücke im Hauptelement und einem anderen Arm (3) zum Bedienen des Verschlusselementes, dadurch gekennzeichnet, dass das Verschlusselement mit einer Kerbe (4) oder einer vorstehenden Nase versehen ist, sowie ausgerüstet mit einer Verriegelung (5), welche mit der Kerbe oder der vorstehenden Nase zusammenwirkt, um das Verschlusselement in der Stellung "offen" des Schmuckverschlusses zu halten.

2. Schmuckverschluss nach Patentanspruch 1, dadurch gekennzeichnet, dass die Verriegelung (5) an einem Ende im Hauptelement (1) befestigt ist, während das andere Ende (8) elastisch beweglich ist und gedrückt werden kann, um die Kerbe oder die vorstehende Nase freizugeben.

3. Schmuckverschluss nach Patentanspruch 2, dadurch gekennzeichnet, dass die Verriegelung aus einer elastischen, abgewinkelten Stange besteht.

4. Schmuckverschluss nach Patentanspruch 3, dadurch gekennzeichnet, dass das Verschlusselement im Hauptelement drehbar gelagert ist, derart, dass es sich in der Ebene des Hauptelementes bewegen kann und dass die Verriegelung, in Gestalt einer elastischen Stange, einen zur Ebene des Hauptelementes im wesentlichen parallelen Teil (7) aufweist, welcher als Feder wirkt, sowie einen zu dieser Ebene im wesentlichen senkrechten Teil (8), wobei dieser senkrechte Teil mit der Kerbe (4) des Verschlusselementes (2) zusammenwirkt und durch eine im Hauptelement vorhandene Bohrung auf der anderen Seite des Hauptelementes hinausragt und mit einem Knopf (6) versehen ist, wobei die im Hauptelement vorhandene Bohrung für die Durchführung des senkrechten Teils (8) der Verriegelung genügend geräumig ist, um beim Drücken des Knopfes (6) das Ausklinken des Teils (8) aus der Kerbe (4) des Verschlusselementes zu gestatten, damit letzteres unter Einwirkung einer Feder die Lücke im Hauptelement schliesst.

FIG. 1

FIG. 2

FIG. 3